# EUROPEAN PATENT APPLICATION

(11) **EP 1 300 263 A1**
(43) Date of publication of application: **09.04.2003**
(21) Application number: 02078717.2
(22) Date of filing: 10.09.2002
(51) Int. Cl.: B60C 23/04

(54) **Tire pressure sensor with power generator**

(30) Priority: 02.10.2001 US 969375
(71) Applicant: Delphi Technologies, Inc., Troy, MI 48007 (US)
(72) Inventor: Lin, Yingjie, El Paso, TX 79912 (US)
(74) Representative: Denton, Michael John

(57) **Abstract**

A tire pressure sensor with power generator (22) includes a spool (26) having a coil (30) wound therearound. Within the spool (26) is a pole piece (28). The tire pressure sensor (22) is installed in a wheel (12) that rotates with respect to a brake clamp (18). The brake clamp (18) includes a magnetic strip (80) that the sensor (22) moves past as the wheel (12) rotates. As the tire pressure sensor (22) moves past the brake clamp (18), the magnetic strip (80) causes the coil (30) to output an AC voltage signal. A rectifier circuit (42) connected to the coil (30) converts the AC voltage to DC voltage. The DC voltage is stored in a storage capacitor (44) to be used as needed by an air pressure sensing element (52) connected thereto.

## Description

### Technical Field

The present invention relates generally to tire pressure sensors.

### Background of the Invention

Tire pressure sensors are standard equipment on many vehicles manufactured today. The tire pressure sensors can alert drivers when the tire air pressure becomes dangerously low. State-of-the-art tire pressure sensors can be divided into two major groups: passive and active. The passive tire pressure sensors use only passive components that do not require a power supply. On the other hand, active tire pressure sensors require a power supply.

Passive sensors are not advantageous because the signal level and the signal to noise ratio are relatively low. Active sensors, however, are advantageous because they provide a relatively strong signal and have a relatively high signal to noise ratio. Unfortunately, providing power to the active sensors is quite difficult. Batteries are presently used, but due to the limited life of the batteries, they must be changed relatively often. Changing the battery can be very labor intensive because oftentimes the tire must be removed from the wheel in order to access the battery.

The present invention has recognized these prior art drawbacks, and has provided the below-disclosed solutions to one or more of the prior art deficiencies.

### Summary of the Invention

A tire pressure sensor includes a spool having a coil wound therearound. A pole piece is placed within the spool and a magnet is placed adjacent to one end of the pole piece. Moreover, a rectifier circuit is connected to the coil. In turn, a storage capacitor is connected to the rectifier circuit. An air pressure sensing element is connected to the storage capacitor and receives power therefrom.

In a preferred embodiment, the sensor is installed in a wheel such that it rotates past a brake clamp that includes a magnetic strip attached thereto. Preferably, the sensor is closely spaced from the magnetic strip as it rotates past the brake clamp. In a preferred embodiment, the magnetic strip is alternatingly magnetized.

Preferably, the tire pressure sensor is installed in a wheel that is circumscribed by a tire. The tire pressure sensor also includes a microprocessor that receives a signal that represents the air pressure within the tire. In a preferred embodiment, an output device is connected to the microprocessor.

In another aspect of the present invention, a wheel assembly includes a wheel that is circumscribed by a tire. A tire pressure sensor installed within the wheel such that it communicates with air within the tire. The tire pressure sensor includes an air pressure sensing element and a rechargeable storage capacitor that provides power to the air pressure sensing element.

In yet another aspect of the present invention, a tire pressure sensor is installed in a wheel that has a tire disposed therearound. The tire pressure sensor includes means for generating alternating current voltage as the wheel rotates. Moreover, the sensor includes means for converting the AC voltage to DC voltage. The converting means is connected to the generating means. The sensor also includes means for storing the DC voltage that is connected to the converting means. In this aspect, the sensor includes means for determining the air pressure within the tire that receives power from the storing means.

The present invention will now be described, by way of example, with reference to the accompanying drawings, in which:

### Brief Description of the Drawings

The present invention will now be described, by way of example, with reference to the accompanying drawings, in which:
Figure 1 is a plan view of a vehicle wheel assembly with portions of the wheel removed to reveal the inner components;
Figure 2 is a cross-section view of a tire pressure sensor;
Figure 2a is a block diagram of an air pressure sensing system;
Figure 3 is a schematic diagram of the tire pressure sensor and brake clamp; and
Figure 4 is a schematic diagram of the tire pressure sensor and alternate brake clamp.

### Description of the Preferred Embodiment

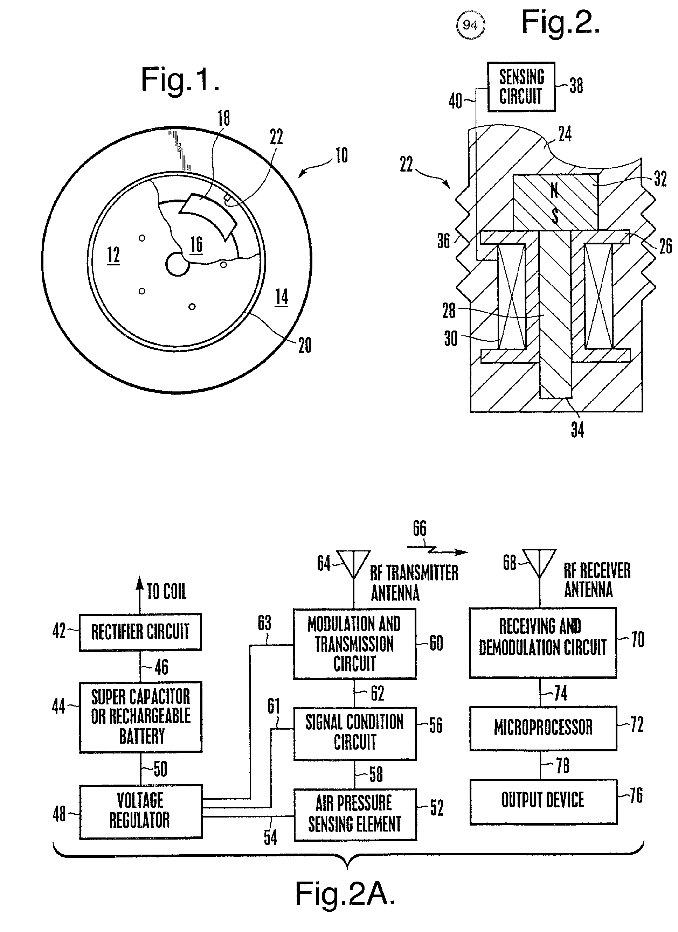

Referring initially to Figure 1, a vehicle wheel assembly is shown and generally designated 10. Figure 1 shows that the wheel assembly 10 includes a wheel 12 circumscribed by a tire 14. Within the wheel 12 is a brake disk 16 over which a brake clamp 18 is partially installed. Figure 1 shows that the wheel 12 includes an outer rim 20 into which a tire pressure sensor 22 is threadably inserted.

Figure 2 shows the details concerning the construction of the tire pressure sensor 22. Figure 2 shows that the sensor 22 includes a preferably aluminum housing 24 in which a preferably plastic, hollow generally "I" shaped spool 26 is disposed. As shown in Figure 2, the spool 26 is formed with a central bore in which a preferably steel, generally cylindrical pole piece 28 is installed. A wire is wound around the spool 26 to form a toroidal coil 30. Moreover, a magnet 32 is placed on top of the spool 26 adjacent to the end of the pole piece 28 and in contact therewith. As also shown in Figure 2, the pole piece 28 extends beyond the bottom of the spool 26 opposite the magnet 32 to establish a sensing tip 34. Figure 2 also shows that the housing 24 forms external threads 36 that engage correspondingly size and shaped internal threads formed in the outer rim 20 of the wheel 12.

Still referring to Figure 2, a sensing circuit 38 is connected to the coil 30 via electrical line 40. It is to be understood that the sensing circuit 38 is located within the tire 14 so that it can be used to determine the air pressure therein.

Now referring to Figure 2a, the components of the sensing circuit 38 shown in Figure 2 can be seen. Figure 2a shows that the sensing circuit 38 includes a rectifier circuit 42 that is connected to the coil 30 (Figure 1). As shown, the rectifier circuit 42 is also connected to a super capacitor 44 via electrical line 46. It is to be understood that in lieu of a super capacitor 44, a rechargeable battery or other similar device used to store electricity can be connected to the rectifier circuit 42. As described below, the rectifier circuit 42 converts alternating current (AC) voltage output by the coil 30 into direct current (DC) voltage that is stored in the super capacitor 44.

As further shown in Figure 2a, a voltage regulator 48 is connected to the super capacitor 44 via electrical line 50. An air pressure sensing element 52 is connected to the voltage regulator 48 via electrical line 54. It is to be understood that the air pressure sensing element 52 is powered by the DC voltage stored in the storage capacitor 44 and utilizes air pressure sensing principles well known in the art in order to sense the air pressure within the tire 14.

Figure 2a further shows a signal condition circuit 56 connected to the air pressure sensing element 52 via electrical line 58. In turn, a modulation and transmission circuit 60 is connected to signal condition circuit via electrical line 62. A radio frequency (RF) transmitter antenna 64 is connected to the modulation and transmission circuit 60. Figure 2a also shows that the signal condition circuit 56 and the modulation and transmission circuit 60 are connected to the voltage regulator via electrical line 61 and electrical line 63, respectively.

As shown, the RF transmitter antenna 64 transmits a signal 66 representing the air pressure within the tire 14 to a RF receiver antenna 68 that is connected to a receiving and demodulation circuit 70. A microprocessor 72 is connected to the receiving and demodulation circuit 70 via electrical line 74. An output device 76 is also connected to the microprocessor 72 via electrical line 78.

It is to be understood that, in a preferred embodiment, the components of the sensing circuit 38 including the rectifier circuit 42, the super capacitor 44, the voltage regulator 48, the sensing element 52, the signal condition circuit 56, the modulation and transmission circuit 60, and the RF transmitter antenna 64 are located within the wheel assembly 10, e.g., within the sensor housing 24. On the other hand, the remaining sensing circuit 38 components, i.e., the RF receiver antenna 68, the receiving and demodulation circuit 70, the microprocessor 72, and the output device 76, are located anywhere within the vehicle except the wheel assembly 10. Accordingly, the sensor 22 communicates with the microprocessor 72 via a wireless connection facilitated by the RF transmitter antenna 64 and the RF receiver antenna 68.

It is also to be understood that the microprocessor 72 can be, e.g., an engine control module (ECM), a body control module (BCM), a powertrain control module (PCM), or any similar device. The microprocessor 72 receives a signal representing the air pressure in the tire 14 from the air pressure sensing element 52. If the air pressure in the tire 14 falls outside a predetermined operating range, the microprocessor 72 sends a signal to the output device 76 to warn the driver.

Further, it is to be understood that the output device 76 can be an audible warning device, e.g., a buzzer or audible alarm. The output device 76 can also be a visual warning device, e.g., a warning lamp or other visual display. Or, the output device 76 can be a visual indicator of the remaining oil life (ROL) of the engine oil, e.g., a gauge or similar device. Moreover, the output device 76 can be a wireless communication device that outputs a signal to a computer or similar device used by a manager who oversees the maintenance of a fleet of vehicles.

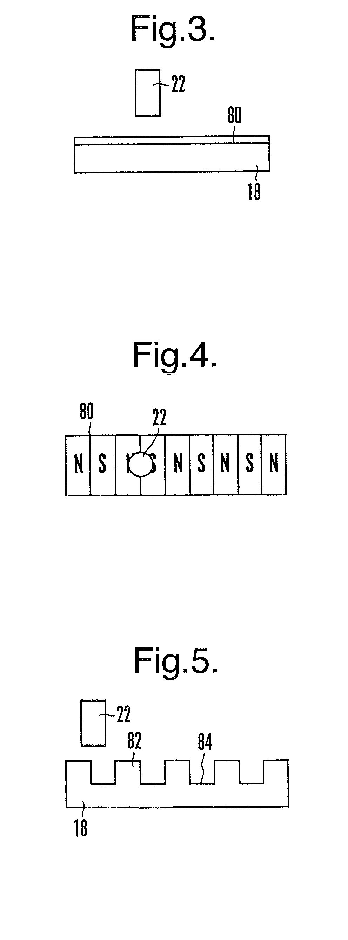

Referring now to Figures 3 and 4, the sensor 22 is shown closely spaced from the brake clamp 18. As shown, the brake clamp 18 includes a magnetic strip 80 attached thereto so that is between the brake clamp 18 and the sensor 22. Preferably, the magnetic strip 80 is alternatingly magnetized, i.e., N - S - N - S ..., along its length. As the wheel 12 rotates, the sensor 22 moves past the brake clamp 18. The alternatingly magnetized strip 80 causes the coil 30 within the sensor 22 to output an AC voltage signal. The AC voltage signal is processed by the rectifier circuit 42 which converts the AC voltage signal to a DC voltage signal and stores the DC voltage in the super capacitor 44. The DC voltage can be used to power the air pressure sensing element 52. As the wheel 12 rotates, the super capacitor 44 is continuously charged as needed.

Figure 5, on the other hand, shows that the brake clamp 18 is alternatingly formed with teeth 82 and slots 84. Preferably, the teeth 82 and slots 84 are made of steel. As the wheel 12 rotates, the sensor 22 moves past the brake clamp 18. The teeth 82 and slots 84 cause the coil 30 within the sensor 22 to output an AC voltage signal that is processed by the rectifier circuit 42 as described above.

It is to be appreciated that in the case of drum brakes, the magnetized strip 80 is affixed to the outer periphery of the fixed backing plate. On the other hand, the outer periphery of the fixed backing plate is formed with the teeth 82 and slots 84. The sensor 22 is inserted in the outer rim 20 of the wheel 12 so that it is closely spaced from the outer periphery of the backing plate. As the wheel 12 and sensor 22 rotate with respect to the backing plate, the storage capacitor 42 is charged as described above.

With the configuration of structure described above, it is to be appreciated that the tire pressure sensor 22 includes a power generator that continuously charges the super capacitor 44 as the wheel 12 rotates. Since the tire pressure sensor 22 generates power for itself, the need to regularly change batteries is obviated.

While the particular TIRE PRESSURE SENSOR WITH POWER GENERATOR as herein shown and described in detail is fully capable of attaining the above-described objects of the invention, it is to be understood that it is the presently preferred embodiment of the present invention and thus, is representative of the subject matter which is broadly contemplated by the present invention, that the scope of the present invention fully encompasses other embodiments which may become obvious to those skilled in the art, and that the scope of the present invention is accordingly to be limited by nothing other than the appended claims, in which reference to an element in the singular is not intended to mean "one and only one" unless explicitly so stated, but rather "one or more." All structural and functional equivalents to the elements of the above-described preferred embodiment that are known or later come to be known to those of ordinary skill in the art are expressly incorporated herein by reference and are intended to be encompassed by the present claims. Moreover, it is not necessary for a device or method to address each and every problem sought to be solved by the present invention, for it is to be encompassed by the present claims. Furthermore, no element, component, or method step in the present disclosure is intended to be dedicated to the public regardless of whether the element, component, or method step is explicitly recited in the claims. No claim element herein is to be construed under the provisions of 35 U.S.C. section 112, sixth paragraph, unless the element is expressly recited using the phrase "means for."

## Claims

1. A tire pressure sensor (22), comprising:
a spool (26);
a pole piece (28) within the spool (26);
a magnet (32) placed adjacent to an end of the pole piece (28);
a coil (30) wound around the spool (26);
a rectifier circuit (42) connected to the coil (30);
a capacitor (44) connected to the rectifier circuit (42); and
an air pressure sensing element (52) electrically connected to the capacitor (44) and receiving power therefrom.

2. The tire pressure sensor (22) of Claim 1, wherein the sensor (22) is installed in a wheel (12) such that it rotates past a brake clamp (18), the brake clamp (18) including a magnetic strip (80), the sensor (22) being closely spaced from the magnetic strip (80) as the sensor (22) rotates therepast.

3. The tire pressure sensor (22) of Claim 1, wherein the sensor (22) is installed in a wheel (12) such that it rotates past a brake clamp (18), the brake clamp (18) alternatingly formed with plural teeth (82) and slots (84), the sensor (22) being closely spaced from the teeth (82) and slots (84) as the sensor (22) rotates therepast.

4. The tire pressure sensor (22) of Claim 2, wherein the magnetic strip (80) is alternatingly magnetized.

5. The tire pressure sensor (22) of Claim 1, wherein tire pressure sensor (22) is installed in a wheel (12) circumscribed by a tire (12), and the tire pressure sensor (22) further comprises:
a microprocessor (72) receiving a signal representing air pressure within the tire (12).

6. The tire pressure sensor (22) of Claim 5, further comprising:
an output device (76) connected to the microprocessor (72).

7. A wheel assembly (10), comprising:
a wheel (12);
a tire (14) circumscribing the wheel (12); and
a tire pressure sensor (22) installed within the wheel (12) such that it communicates with air within the tire (14), the tire pressure sensor (22) including an air pressure sensing element (52), and a rechargeable capacitor (44) providing power to the air pressure sensing element (52).

8. The wheel assembly (10) of Claim 7, further comprising:
a brake disk (16) within the wheel (12); and
a brake clamp (18) at least partially disposed around the brake disk (16), the brake clamp (18) including a magnetic strip (80), the tire pressure sensor (22) moving past the magnetic strip (80) as the wheel (12) rotates.

9. The wheel assembly (10) of Claim 8, wherein the tire pressure sensor (22), comprises:
a spool (26);
a pole piece (28) within the spool (26);
a magnet (32) placed adjacent to an end of the pole piece (28); and
a coil (30) wound around the spool (26), the coil (30) outputting an AC voltage signal as the tire pressure sensor (22) moves past the magnetic strip (80).

10. The wheel assembly (10) of Claim 9, wherein the tire pressure sensor (22), further comprises:
a rectifier circuit (42) connected to the coil (30) and the capacitor (44).

11. The wheel assembly (10) of Claim 10, further comprising:
a microprocessor (72) receiving a signal representing the air pressure in the tire (12) from the sensor (22), the microprocessor (72) being distanced from the sensor (22).

12. The wheel assembly (10) of Claim 11, further comprising:
an output device (76) connected to the microprocessor (72).

13. The wheel assembly (10) of Claim 8, wherein the magnetic strip (80) is alternatingly magnetized.

14. The wheel assembly (10) of Claim 7, further comprising:
a brake disk (16) within the wheel (12); and
a brake clamp (18) at least partially disposed around the brake disk (16), the brake clamp (18) alternatingly formed with plural teeth (82) and slots (84), the tire pressure sensor (22) moving past the plural teeth (82) and plural slots (84) as the wheel (12) rotates.

15. A tire pressure sensor (22) installed in a wheel (12) having a tire (14) disposed therearound, comprising:
means for generating alternating current voltage as the wheel (12) rotates;
means for converting the AC voltage to DC voltage connected to the generating means;
means for storing the DC voltage connected to the converting means; and
means for determining the air pressure within the tire (14) receiving power from the storing means.

16. The tire pressure sensor (22) of Claim 15, further comprising:
means for determining when the air pressure within the tire (14) falls outside a predetermined operating range.

17. The tire pressure sensor (22) of Claim 16, further comprising:
means for alerting a driver when the air pressure within the tire (14) falls outside the predetermined operating range.
